# EUROPÄISCHE PATENTSCHRIFT

(11) **EP 1 917 449 B1**
(45) Veröffentlichungstag und Bekanntmachung des Hinweises auf die Patenterteilung: **16.09.2015**
(21) Anmeldenummer: 06776800.2
(22) Anmeldetag: 11.08.2006
(51) Int. Cl.: F16D 48/02

(54) **EINRICHTUNG ZUM BETÄTIGEN EINER MEMBRANFEDERKUPPLUNQ FÜR FAHRZEUGE**
DEVICE FOR ACTUATING A DIAPHRAGM SPRING CLUTCH FOR VEHICLES
DISPOSITIF D'ACTIONNEMENT D'UN EMBRAYAGE A RESSORTS A DIAPHRAGME DESTINE A DES VEHICULES

(30) Priorität: 24.08.2005 DE 102005039922
(43) Veröffentlichungstag der Anmeldung: 07.05.2008
(73) Patentinhaber: ZF Friedrichshafen AG, 88038 Friedrichshafen (DE)
(72) Erfinder: BITZER, Franz, 88048 Friedrichshafen (DE); HERTER, Peter, 88212 Ravensburg (DE)
(86) Internationale Anmeldenummer: PCT/EP2006/007984
(87) Internationale Veröffentlichungsnummer: WO 2007/022889

(56) Entgegenhaltungen:
- EP-A- 1 484 654
- WO-A-01/20200
- WO-A-02/25131
- DE-A1- 10 316 419
- US-A1- 2005 233 858

## Beschreibung

Die vorliegende Erfindung betrifft eine Einrichtung zum Betätigen einer Membranfederkupplung für Fahrzeuge gemäß dem Oberbegriff des Patentanspruchs 1 bzw. 4.

Membranfederkupplungen werden vielfach als Anfahrkupplungen in Verbindung mit automatisierten Getrieben in Kraftfahrzeugen eingesetzt. Dabei dient eine Membranfeder dazu, denjenigen Anpressdruck zu liefern, mit dem Druckplatten und mit Reibbelägen versehene Kupplungsscheiben in Reibeingriff miteinander gebracht werden. Um die Kupplung auszurücken, muss die Druckplatte von der zugeordneten Kupplungsscheibe abgehoben werden, weshalb die die Druckplatte belastende Membranfeder entgegen der von dieser aufgebrachten Anpresskraft verstellt werden muss. In der Praxis greifen die von einem Stellantrieb bewegten Kupplungsausrückorgane über einen geeigneten Hebelarm an der Membranfeder an, so dass die von den Ausrückorganen aufzubringende Ausrückkraft jedenfalls kleiner als die von der Membranfeder aufgebrachte Anpresskraft ist.

Der Stellantrieb wird von einem vorgeschalteten Regler angesteuert, welcher die Steuergrößen für den Stellantrieb liefert. Auf den Unterschied von Einscheiben-Trockenkupplungen und Mehrscheiben-Trockenkupplungen sowie von gezogenen und gedrückten Kupplungen wird hier nicht eingegangen, da das Funktionsprinzip bei allen diesen Kupplungstypen gleich ist und die damit verbundenen, im Folgenden zu beschreibenden Nachteile gleichermaßen auftreten. Als Stellantriebe kommen grundsätzlich pneumatische, hydraulische oder elektrische Antriebe in Betracht, wenn auch in der Fahrzeugtechnik vorwiegend pneumatische oder hydraulische Stellantriebe eingesetzt werden.

Ein grundsätzlicher Nachteil von Membranfedern in Verbindung mit Fahrzeugkupplungen ist deren stark nichtlineare Ausrückkraftcharakteristik, d.h. der Verlauf der Ausrückkraft über dem Ausrückweg. Diese Ausrückkraftcharakteristik ist dadurch gekennzeichnet, dass sehr steile Verläufe, bei denen die Ausrückkraft sich bei einem vorgegebenen Ausrückweg sehr stark ändert, mit flachen Verläufen abwechseln, bei denen über einen großen Ausrückweg im wesentlichen keine Kraftänderung auftritt.

Die Ausrückkraft ist entsprechend dieser Ausrückkraftcharakteristik nichtlinear vom Ausrückweg abhängig. Diese nicht lineare Ausrückkraft führt dazu, dass sich die Streckenverstärkung abhängig vom Ausrückweg bzw. von der Ausrückposition der Ausrückorgane und des Stellantriebes ändert. Unter dem Begriff "Streckenverstärkung" wird die Reaktion der Regelstrecke auf eine vorgegebene Stellgröße des Stellantriebes bezeichnet. Die Regelstrecke umfaßt beispielsweise Membranfeder, Ausrücklager, Ausrückgabel und Aktuator. Diese Reaktion der Regelstrecke auf eine vorgegebene Verstellgröße ist demnach positionsabhängig veränderlich.

Wenn diese Tatsache - beispielsweise bei der Reglerauslegung - nicht berücksichtigt wird, so führt dies in Bereichen mit geringer Streckenverstärkung zu einem sehr trägen Reglerverhalten (die Zeiten zur Erreichung der Sollposition werden sehr lang), oder der Regler neigt an Stellen mit hoher Streckenverstärkung zum Schwingen.

Die EP 1 484 654 A2 offenbart ein Steuerungssystem für eine Kupplung, welches derart ausgebildet und verbessert ist, dass auch Störgrößen, welche sich schlagartig ändern und auf das Kupplungssystem wirken, kompensiert werden können. Die auf das System wirkenden Störgrößen werden durch einen Controller kompensiert, wobei der Controller nach dem sliding-mode Verfahren arbeitet, welches eine lineare Funktion zum entgegenwirken auf die Störungen umfasst.

Gemäß der WO 01/20200 A1 wird ein Verfahren zur Regelung einer Kupplung in einem Getriebe vorgeschlagen, bei welchem Toleranzen eines hydraulischen Stellsystems mit Hilfe eines von einem Beobachter geschätzten Kupplungsdrucks ausgeglichen werden.

Die WO 02/25131 A1 offenbart ein Verfahren zum Steuern einer automatischen Kraftfahrzeugkupplung. Aus einem Positionssollwert und einem Istwert der Position wird eine Regelabweichung ermittelt und daraus ein Regelsignal berechnet, mit dem die Kupplungsposition gesteuert wird. Dem Regelsignal wird ein aus einem Positionssollwert der Kupplung berechnetes Vorsteuersignal hinzugefügt, mit dem Nichtlinearitäten der Regelung kompensiert werden, Somit kann durch das Vorsteuersignal ein Regelfehler der Regelung reduziert werden.

Vor diesem Hintergrund liegt der Erfindung die Aufgabe zugrunde, eine Einrichtung zum Betätigen einer Membranfederkupplung für Fahrzeuge zu schaffen, bei der die Streckenverstärkung über den gesamten Ausrückweg zumindest annähernd gleich ist und einen Wert hat, bei welchem das Reglerverhalten weder zu träge ist noch zu Schwingungen neigt.

Die Lösung dieser Aufgabe ergibt sich aus den Merkmalen der Hauptansprüche, während vorteilhafte Ausgestaltungen und Weiterbildungen der Erfindung den Unteransprüchen entnehmbar sind.

Der Erfindung liegt die Erkenntnis zugrunde, dass die Streckenverstärkung, also die Reaktion der Regelstrecke auf eine Stellgröße, zwar einerseits von der jeweiligen Ausrückkraft in einem bestimmten Punkt des Ausrückweges abhängt, andererseits aber auch von der in diesem Punkt wirkenden Stellgröße des Stellantriebes abhängig ist, so dass es möglich sein muss, die Streckenverstärkung durch eine entsprechende Modifizierung der Stellkraft im Sinne der oben genannten Aufgabe zu beeinflussen bzw. zielführend zu wählen.

Demnach geht die Erfindung aus von einer Einrichtung zum Betätigen einer Membranfederkupplung für Fahrzeuge mittels eines pneumatischen, hydraulischen oder elektrischen Stellantriebes, umfassend einen dem Stellantrieb vorgeschalteten Regler, dessen Ausgangs-Steuergröße den Stellantrieb ansteuert.

Zur Lösung der oben genannten Aufgabe ist dabei vorgesehen, dass ein Regler eingesetzt wird, dessen Kennlinienverlauf (Ausgangs-Steuergröße über Eingangs-Sollwert) so ausgelegt ist, dass der der Membranfeder eigene nichtlineare Verlauf der Ausrückkraft (Ausrückkraft über Ausrückweg) soweit kompensiert wird, dass die Streckenverstärkung wenigstens annähernd gleich bleibt und das Reglerverhalten weder zu träge ist, noch zum Schwingen neigt.

Da es technisch möglich ist, Regler so auszulegen, dass diese einen gewünschten Kennlinienverlauf haben, besteht auf diese Weise die Möglichkeit, durch Überlagerung der Ausrückkraftcharakteristik der Membranfeder einerseits und einer geeigneten Kennlinie des Reglers andererseits den nichtlinearen Verlauf der Ausrückkraftcharakteristik zu kompensieren und der Streckenverstärkung die gewünschten Eigenschaften zu geben.

Wie weiter vorne bereits erwähnt wurde, sind Einrichtungen zum Betätigten einer Membranfederkupplung im Allgemeinen mit pneumatischen oder hydraulischen Stellantrieben ausgestattet, welche über gesteuerte Einlass- und Auslassventilanordnungen angesteuert werden. Bei einer derartigen Einrichtung ist gemäß der Erfindung vorgesehen, dass der Regler so ausgelegt ist, dass er jeweils in Abhängigkeit von der Ausrückposition der Kupplung an die Ventilanordnungen des Stellantriebes eine Steuergröße entsprechend der vorgegebenen Kennlinie ausgibt.

Die Steuergröße des Reglers und damit die Stellgröße des von diesem angesteuerten Stellantriebes ist deshalb in jedem Punkt des Ausrückweges so beschaffen, dass die daraus resultierende Streckenverstärkung über den gesamten Ausrückweg wenigstens annähernd gleich bleibt und die gewünschte Größe hat.

Um bei einer Einrichtung mit einem pneumatischen oder hydraulischen Stellantrieb, welcher über gesteuerte Einlass- und Auslassventilanordnungen angesteuert wird, einen möglichst großen Bereich für den Fluiddurchsatz zu schaffen, ist es bereits bekannt, Ventilanordnungen mit zwei oder mehr parallel angeordneten, einzeln ansteuerbaren Ventilen einzusetzen, die für eine Erhöhung der Fluiddurchsätze stufenweise zugeschaltet werden. Um eine sprunghafte Änderung des Fluiddurchsatzes und damit der Stellgröße der Stelleinrichtung in den Umschaltpunkten zu vermeiden, ist gemäß der Erfindung vorgesehen, dass beim Zu- und Wegschalten einzelner Ventile einer Ventilanordnung die jeweils aktiven Ventile, d.h. deren Durchsatz mittels einer entsprechend ausgelegten Kennlinie des Reglers so angesteuert werden, dass sich die daraus resultierende Streckenverstärkung im Umschaltpunkt nicht ändert.

Gemäß einer bevorzugten konstruktiven Ausgestaltung der Erfindung ist vorgesehen, dass jede Ventilanordnung ein erstes Ventil mit einem größeren Blendendurchmesser und ein zweites Ventil mit einem kleineren Blendendurchmesser umfasst, wobei oberhalb einer vorgegebenen Steuergröße des Reglers beide Ventile, unterhalb dieser Steuergröße nur das zweite Ventil aktiv ist. Der Wert, um den die Ventilansteuerung bei der Umschaltung verändert werden muss, kann aus den physikalischen Ventilparametern (Blendendurchmesser usw.) berechnet werden. Dadurch, dass bei kleinen Steuergrößen (unterhalb der vorgegebenen Steuergröße des Reglers) nur das Ventil mit kleinerem Blendendurchmesser angesteuert wird, wird eine wesentlich genauere Positionierung ermöglicht, ohne die Reglerabstimmung negativ zu beeinflussen.

Gemäß einer bevorzugten konstruktiven Ausgestaltung der Erfindung ist weiter vorgesehen, dass die Ventile einer Ventilanordnung jeweils Zwei-Stellungsventile mit steuerbarer Pulsfrequenz sind. Der Durchsatz der Ventile wird demnach nicht über eine Veränderung des Ventil-Durchlassquerschnittes sondern über die Anzahl der Öffnungs-/Schließzyklen in der Zeiteinheit gesteuert. Derartige Ventile weisen bei einem konstruktiv einfachen Aufbau und steuerungstechnisch einfacher Handhabung eine hohe Funktionssicherheit und Funktionsgenauigkeit auf.

Die resultierende Streckenverstärkung des Systems kann auch durch einen variierenden Versorgungsdruck der Einlassventilanordnung beeinflusst werden. In einem solchen Fall ist gemäß der Erfindung vorgesehen, dass der Kennlinienverlauf des Reglers so ausgelegt ist, dass ein über den Ausrückweg der Kupplung variierender Versorgungsdruck der Einlassventilanordnung ebenfalls im Sinne einer gleich bleibenden Streckenverstärkung kompensiert wird, die Steuergröße des Reglers wird also abhängig vom Versorgungsdruck modifiziert.

Die Kennlinie zur Kompensation der Nichtlinearität der Membranfeder kann gemäß einer weiteren Ausgestaltung der Erfindung auch auf die Regler-parameter direkt einwirken und diese im Sinne einer über den Ausrückweg der Kupplung gleich bleibenden Streckenverstärkung verändern.

Die Erfindung lässt sich anhand eines Ausführungsbeispieles weiter erläutern. Dazu ist der Beschreibung eine Zeichnung beigefügt. In dieser zeigt
- Fig. 1: eine herkömmliche Membranfederkupplung für Fahrzeuge im eingerückten Zustand,
- Fig. 2: die Membranfederkupplung der Fig. 1 im ausgerückten Zustand,
- Fig. 3: ein Diagramm einer Ausrückkraftkennlinie für eine Membranfederkupplung gemäß den Fig. 1 und 2 sowie
- Fig. 4: schematisch das Schaltbild einer Einrichtung zum Betätigen einer Membranfederkupplung mittels eines pneumatischen Stellantriebes.

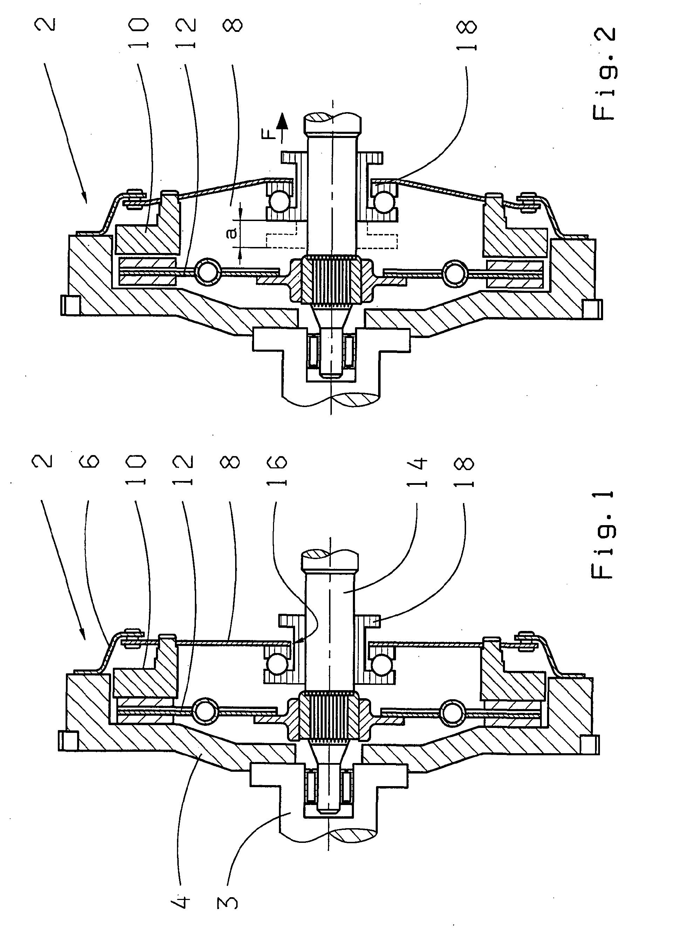

Fig. 1 zeigt in einem Längsschnitt eine Membranfederkupplung 2 mit einem herkömmlichen Aufbau. Die Membranfederkupplung 2 umfasst eine mit der Kurbelwelle 3 verbundene Schwungscheibe 4, die über ein korbartiges Verbindungsbauteil 6 eine Membranfeder 8 trägt. Die Membranfeder 8 ist etwa kreisringförmig ausgebildet. Sie ist an ihrem Außenumfang mit dem Verbindungsbauteil 6 verbunden. Vom Außenumfang aus radial einwärts ist an der Membranfeder 8 ein Druckring 10 befestigt, welcher sich in der in Fig. 1 dargestellten eingerückten Stellung der Kupplung an eine Kupplungsscheibe 12 anlegt und diese an die Schwungscheibe 4 andrückt und einen Reibeingriff zwischen dem mit der Schwungscheibe 4 verbundenen Druckring 10 sowie der Kupplungsscheibe 12 herstellt. Die Kupplungsscheibe 12 ist mit einer Getriebeeingangswelle 14 fest verbunden, so dass bei der in Fig. 1 dargestellten eingerückten Stellung der Kupplung 2 die Getriebeeingangswelle 14 mit der Kurbelwelle 3 drehverbunden ist.

Die Membranfeder 8 hat eine zentrale Öffnung 16, durch die hindurch ein mit einem nicht dargestellten Stellantrieb verbundenes Ausrückorgan 18 greift, welches dazu dient, die Kupplung auszurücken, wie anhand der Fig. 2 dargestellt ist.

Fig. 2 zeigt die Membranfederkupplung 2 im ausgerückten Zustand. Das Ausrückorgan 18 ist um den Ausrückweg a nach rechts verstellt worden und hat dabei die Membranfeder 8 sowie den damit verbundenen Druckring 10 so weit mitgenommen, dass kein Reibeingriff zwischen dem Druckring 10 und der Kupplungsscheibe 12 mehr besteht, die Kupplung 2 also ausgerückt ist.

Um das Ausrückorgan 18 aus der in Fig. 1 dargestellten Stellung in die in Fig. 2 dargestellte Stellung zu verschieben, wird von einem nicht dargestellten Stellantrieb eine Ausrückkraft F aufgebracht.

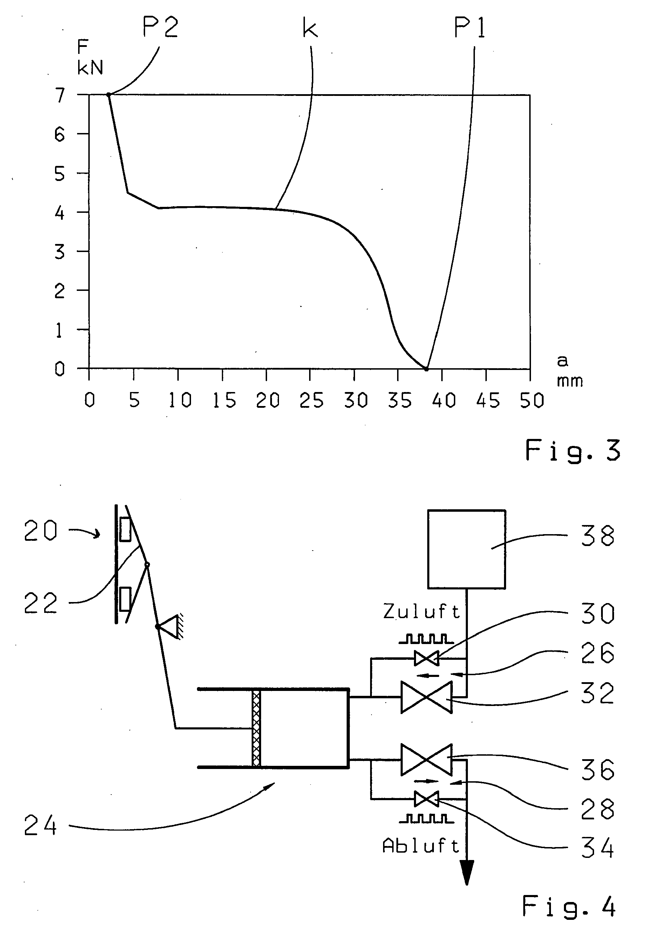

Fig. 3 zeigt den Verlauf der Ausrückkraft F über den Ausrückweg a, und sie entspricht - von links nach rechts - der Bewegung des Ausrückorgans 18 beim Einrücken der Kupplung 2. Der Punkt P1 entspricht demnach dem in Fig. 1 dargestellten Zustand, also dem eingerückten Zustand, bei welchem das Ausrückorgan 18 keine Kraft auf die Membranfeder 8 überträgt, während der Punkt P2 der Verlaufskurve k dem Zustand in Fig. 2 entspricht, bei welchem das Ausrückorgan 18 eine hohe Ausrückkraft aufzubringen hat.

Die Verlaufskurve k ist ersichtlich stark nichtlinear, wie es für Membranfedern typisch ist. Ohne eine geeignete Kompensation hat eine derartige Verlaufskurve zur Folge, dass die Streckenverstärkung, also die Reaktion der Regelstrecke auf eine gleich bleibende Stellgröße des Stellantriebes, sich über den Ausrückweg ändert, wie weiter vorne ausführlich dargelegt wurde.

Eine Kompensation im Sinne einer über den Ausrückweg gleich bleibenden Streckenverstärkung erfolgt über einen dem Stellantrieb vorgeschalteten Regler.

Fig. 4 zeigt schematisch eine Membranfederkupplung 20 mit einer Membranfeder 22, die über einen pneumatischen Stellantrieb 24 betätigt werden kann, wie anhand der Fig. 1 und 2 bereits dargelegt wurde. Der pneumatische Stellantrieb 24 wird über eine steuerbare Einlassventilanordnung 26 und eine steuerbare Auslassventilanordnung 28 angesteuert.

Die Einlassventilanordnung 26 umfasst zwei Zwei-Stellungsventile 30 und 32, deren Öffnungs-/Schließfrequenz steuerbar ist. Das Ventil 30 hat einen kleineren Blendenquerschnitt und das Ventil 32 einen größeren Blendenquerschnitt.

In ähnlicher Weise umfasst die Ventilanordnung 28 zwei Zwei-Stellungsventile 34 und 36, wobei das Ventil 34 einen kleineren Blendenquerschnitt, das Ventil 36 einen größeren Blendenquerschnitt hat.

Die Einlassventilanordnung 26 ist mit einer Pressluftquelle 38 verbunden, welche die zum Verstellen des pneumatischen Stellantriebes 24 erforderliche Zuluft mit einem bestimmten Versorgungsdruck liefert.

Wie weiter vorne bereits dargelegt wurde, wird zum Ausrücken der Membranfederkupplung 20 der Stellantrieb 24 gegen die Kraft der Membranfeder 22 verstellt, d.h. der Zylinder des Stellantriebes 24 wird über die Einlassventilanordnung 26 mit Pressluft versorgt. Wenn die Steuergröße des Reglers oberhalb einer vorgegebenen Grenze liegt, werden beide Ventile 30, 32 angesteuert. Liegt die Steuergröße des Reglers unterhalb dieser Grenze, wird nur das Ventil 30 mit dem kleineren Blendenquerschnitt angesteuert.

Damit sich in dieser Phase die Streckenverstärkung nicht sprunghaft verändert, wird die Ventilansteuergröße, im vorliegenden Fall die Ventilfrequenz des Ventils 30 entsprechend dem Durchsatz des wegfallenden Ventils 32 modifiziert, so dass sich der Durchsatz kontinuierlich an den zuvor mit beiden Ventilen erreichten Durchsatz anschließt. Der Wert, um den die Ventilansteuerung bei der Umschaltung verändert werden muss, kann aus den physikalischen Ventilparametern (Blendendurchmesser usw.) berechnet werden.

Dadurch, dass bei kleinen Steuergrößen (Steuergröße unterhalb der vorgegebenen Grenze) nur das Ventil mit kleinem Blendendurchmesser angesteuert wird, wird eine wesentlich genauere Positionierung ermöglicht, ohne die Reglerabstimmung negativ zu beeinflussen.

Zum Einrücken der Membranfederkupplung 20 wird die im Zylinder des pneumatischen Stellantriebes 24 befindliche Druckluft über die Auslassventilanordnung 28 in ähnlicher Weise gesteuert abgelassen.

## Patentansprüche

1. Einrichtung zum Betätigen einer Membranfederkupplung (2) für Fahrzeuge mittels eines pneumatischen oder hydraulischen Stellantriebes, welcher über gesteuerte Einlass- und Auslassventilanordnungen angesteuert wird, umfassend einen dem Stellantrieb vorgeschalteten Regler, dessen Ausgangs-Steuergröße den Stellantrieb ansteuert, - wobei ein Regler eingesetzt wird, dessen Kennlinienverlauf (Ausgangs-Steuergröße über Eingangs-Sollwert) so ausgelegt ist, dass durch eine Überlagerung der Ausrückkraftcharakteristik der Membranfeder (8) einerseits und der Kennlinie des Reglers andererseits der der Membranfeder (8) eigene nichtlineare Verlauf (k) der Ausrückkraft (F) (Ausrückkraft über Ausrückweg) über eine entsprechend abgestimmte Ansteuerung des Stellantriebes wenigstens annähernd kompensiert wird , wobei der Regler so ausgelegt ist, dass er jeweils in Abhängigkeit von der Ausrückposition der Kupplung (2) an die Ventilanordnungen (26, 28) des Stellantriebes (24) eine Steuergröße entsprechend der vorgegebenen Kennlinie ausgibt,wobei die Ventilanordnungen (26, 28) jeweils zwei oder mehr parallel angeordnete, einzeln ansteuerbare Ventile aufweisen, **dadurch gekennzeichnet, dass** beim Zu- und Wegschalten einzelner Ventile (30, 32; 34, 36) einer Ventilanordnung (26; 28) die jeweils aktiven Ventile so angesteuert werden, dass sich die daraus resultierende Streckenverstärkung im Umschaltpunkt nicht ändert.

2. Einrichtung nach Anspruch 1, **dadurch gekennzeichnet, dass** jede Ventilanordnung (28; 30) ein erstes Ventil (32; 36) mit einem größeren Blendenquerschnitt und ein zweites Ventil (30; 34) mit einem kleineren Blendenquerschnitt umfasst, wobei oberhalb einer vorgegebenen Steuergröße des Reglers beide Ventile (30, 32; 34, 36) aktiv sind, und unterhalb dieser Steuergröße nur das zweite Ventil (30; 34) aktiv ist.

3. Einrichtung nach Anspruch 1 oder 2, dadurch **gekennzeich**n e t, dass die Ventile (30, 32; 34, 36) jeweils Zwei-Stellungsventile mit steuerbarer Öffnungs-/Schließfrequenz sind.

4. Einrichtung zum Betätigen einer Membranfederkupplung (2) für Fahrzeuge mittels eines pneumatischen oder hydraulischen Stellantriebes, welcher über gesteuerte Einlass- und Auslassventilanordnungen angesteuert wird, umfassend einen dem Stellantrieb vorgeschalteten Regler, dessen Ausgangs-Steuergröße den Stellantrieb ansteuert, - wobei ein Regler eingesetzt wird, dessen Kennlinienverlauf (Ausgangs-Steuergröße über Eingangs-Sollwert) so ausgelegt ist, dass durch eine Überlagerung der Ausrückkraftcharakteristik der Membranfeder (8) einerseits und der Kennlinie des Reglers andererseits der der Membranfeder (8) eigene nichtlineare Verlauf (k) der Ausrückkraft (F) (Ausrückkraft über Ausrückweg) über eine entsprechend abgestimmte Ansteuerung des Stellantriebes wenigstens annähernd kompensiert wird, wobei der Regler so ausgelegt ist, dass er jeweils in Abhängigkeit von der Ausrückposition der Kupplung (2) an die Ventilanordnungen (26, 28) des Stellantriebes (24) eine Steuergröße entsprechend der vorgegebenen Kennlinie ausgibt, dadurch g e **kennzeichnet,** dass der Kennlinienverlauf des Reglers so ausgelegt ist, dass ein über den Ausrückweg der Kupplung (20) variierender Versorgungsdruck der Einlassventilanordnung (26) im Sinne einer gleich bleibenden Streckenverstärkung kompensiert wird.

5. Einrichtung nach einem der Ansprüche 1 bis 4, **dadurch gekenn**-**z eichnet**, dass die Kennlinie des Reglers direkt auf die Reglerparameter einwirkt.

## Claims

1. Device for actuating a diaphragm spring clutch (2) for vehicles by means of a pneumatic or hydraulic actuator drive which is actuated by means of controlled inlet and outlet valve arrangements, comprising a regulator which is connected upstream of the actuator drive and whose output control variable actuates the actuator drive, - wherein a regulator is used whose characteristic curve profile (output control variable plotted against input setpoint) is configured in such a way that by superimposing the disengagement force characteristic of the diaphragm spring (8), on the one hand, and the characteristic curve of the regulator, on the other, the non-linear profile (k), particular to the diaphragm spring (8), of the disengagement force (F) (disengagement force plotted against disengagement travel) is at least approximately compensated by means of a correspondingly adjusted actuation of the actuator drive, wherein the regulator is configured in such a way that it outputs a control variable in accordance with the predefined characteristic curve to the valve arrangements (26, 28) of the actuator drive (24), in each case as a function of the disengagement position of the clutch (2), wherein the valve arrangements (26, 28) each have two or more individually actuable valves arranged in parallel, **characterized in that** during the activation and deactivation of individual valves (30, 32; 34, 36) of a valve arrangement (26; 28) the respectively active valves are actuated in such a way that the resulting system boosting at the switching point does not change.

2. Device according to Claim 1, **characterized in that** each valve arrangement (28; 30) comprises a first valve (32; 36) with a relatively large orifice cross section, and a second valve (30; 34) with a relatively small orifice cross section, wherein both valves (30, 32; 34, 36) are active above a predefined control variable of the regulator, and only the second valve (30; 34) is active below this control variable.

3. Device according to Claim 1 or 2, **characterized in that** the valves (30, 32; 34, 36) are each two-position valves with controllable opening/closing frequencies.

4. Device for actuating a diaphragm spring clutch (2) for vehicles by means of a pneumatic or hydraulic actuator drive which is actuated by means of controlled inlet and outlet valve arrangements, comprising a regulator which is connected upstream of the actuator drive and whose output control variable actuates the actuator drive, - wherein a regulator is used whose characteristic curve profile (output control variable plotted against input setpoint) is configured in such a way that by superimposing the disengagement force characteristic of the diaphragm spring (8), on the one hand, and the characteristic curve of the regulator, on the other, the non-linear profile (k), particular to the diaphragm spring (8), of the disengagement force (F) (disengagement force plotted against disengagement travel) is at least approximately compensated by means of a correspondingly adjusted actuation of the actuator drive, wherein the regulator is configured in such a way that it outputs a control variable in accordance with the predefined characteristic curve to the valve arrangements (26, 28) of the actuator drive (24), in each case as a function of the disengagement position of the clutch (2), **characterized in that** the characteristic curve profile of the regulator is configured such that a supply pressure, varying over the disengagement travel of the clutch (2), of the inlet valve arrangement (26) is compensated with the effect of maintaining constant system boosting.

5. Device according to one of Claims 1 to 4, **characterized in that** the characteristic curve of the regulator acts directly on the regulator parameters.

## Revendications

1. Dispositif d'actionnement d'un embrayage à ressort à diaphragme (2) pour véhicules à l'aide d'un entraînement de réglage pneumatique ou hydraulique commandé via des agencements de soupape d'admission et de sortie commandés, comprenant un régulateur connecté en amont de l'entraînement de réglage dont la grandeur de commande de sortie commande l'entraînement de réglage, - un régulateur étant utilisé dont la courbe caractéristique (grandeur de commande de sortie sur valeur théorique d'entrée) est conçue de telle sorte qu'une superposition de la caractéristique de force de désaccouplement du ressort à diaphragme (8) d'une part et de la caractéristique du régulateur d'autre part permet de compenser au moins approximativement la courbe (k) non linéaire, propre au ressort à diaphragme (8), de la force de désaccouplement (F) (force de désaccouplement via course de retour) via une commande coordonnée de façon correspondante de l'entraînement de réglage, le régulateur étant conçu de façon à envoyer respectivement une grandeur de commande correspondant à la caractéristique prédéfinie en fonction de la position de désaccouplement de l'embrayage (2) au niveau des agencements de soupape (26, 28) de l'entraînement de réglage (24), les agencements de soupape (26, 28) comportant respectivement deux soupapes ou plus pouvant être commandées individuellement et disposées en parallèle, **caractérisé en ce que** lors de la connexion et déconnexion des soupapes (30, 32 ; 34, 36) individuelles d'un agencement de soupape (26 ; 28), les soupapes respectivement actives sont commandées de telle sorte que le gain de tronçon en résultant ne varie pas au point de commutation.

2. Dispositif selon la revendication 1, **caractérisé en ce que** chaque agencement de soupape (28 ; 30) comprend une première soupape (32 ; 36) avec une section transversale d'écran plus importante et une deuxième soupape (30 ; 34) avec une section transversale d'écran moindre, les deux soupapes (30, 32 ; 34, 36) étant actives au-delà d'une grandeur de commande prédéfinie du régulateur et seule la deuxième soupape (30 ; 34) étant active en deçà de cette grandeur de commande.

3. Dispositif selon la revendication 1 ou 2, **caractérisé en ce que** les soupapes (30, 32 ; 34, 36) sont respectivement des soupapes à deux positions avec fréquence d'ouverture/fermeture commandable.

4. Dispositif d'actionnement d'un embrayage à ressort à diaphragme (2) pour véhicules à l'aide d'un entraînement de réglage pneumatique ou hydraulique commandé via des agencements de soupape d'admission et de sortie commandés, comprenant un régulateur connecté en amont de l'entraînement de réglage dont la grandeur de commande de sortie commande l'entraînement de réglage, - un régulateur étant utilisé dont la courbe caractéristique (grandeur de commande de sortie sur valeur théorique d'entrée) est conçue de telle sorte qu'une superposition de la caractéristique de force de désaccouplement du ressort à diaphragme (8) d'une part et de la caractéristique du régulateur d'autre part permet de compenser au moins approximativement la courbe (k) non linéaire, propre au ressort à diaphragme (8), de la force de désaccouplement (F) (force de désaccouplement via course de retour) via une commande coordonnée de façon correspondante de l'entraînement de réglage, le régulateur étant conçu de façon à envoyer respectivement une grandeur de commande correspondant à la caractéristique prédéfinie en fonction de la position de désaccouplement de l'embrayage (2) au niveau des agencements de soupape (26, 28) de l'entraînement de réglage (24), **caractérisé en ce que** la courbe caractéristique du régulateur est conçue de façon à compenser une pression d'alimentation de l'agencement de soupape d'admission (26) variant sur la course de désaccouplement de l'embrayage (2) dans le sens d'un gain de tronçon restant constant.

5. Dispositif selon l'une quelconque des revendications 1 à 4, **caractérisé en ce que** la caractéristique du régulateur agit directement sur les paramètres de régulateur.
